# EUROPÄISCHE PATENTSCHRIFT

(11) **EP 0 319 452 B1**
(45) Veröffentlichungstag und Bekanntmachung des Hinweises auf die Patenterteilung: **18.05.1994**
(21) Anmeldenummer: 88710049.3
(22) Anmeldetag: 25.11.1988
(51) Int. Cl.: C09B 29/32, C09B 67/14, C09B 41/00

(54) **Monoazopigmente, Verfahren zu ihrer Herstellung und ihre Verwendung**
Monoazo pigments, process to manufacture them and their use
Pigments monoazoiques, leur procédé de préparation et leur utilisation.

(30) Priorität: 01.12.1987 DE 3740622
(43) Veröffentlichungstag der Anmeldung: 07.06.1989
(73) Patentinhaber: HOECHST AKTIENGESELLSCHAFT, 65926 Frankfurt am Main (DE)
(72) Erfinder: Rieper, Wolfgang, Dr., D-6000 Frankfurt am Main (DE)

(56) Entgegenhaltungen:
- FR-A- 2 320 970
- US-A- 2 410 219
- US-A- 4 395 264
- CHEMICAL ABSTRACTS, Band 98, Nr. 10, 7. März 1983, Seite 77, ZusammenfassungNr. 73830d, Columbus, Ohio, US; & CS-A-198 046 (S. KMONICKOVA et al.) 01-06-1982

## Beschreibung

Die Erfindung betrifft Monoazopigmente, die aus Dichlor- oder Trichlorbenzoldiazoniumsalzen und CH-aciden Kupplungskomponenten aus der Acetessigsäurearylamid- oder Naphtholreihe hergestellt werden und nur äußerst geringe Mengen an polychlorierten Biphenylen (PCB) enthalten.

Es ist bekannt, daß industriell hergestellte organische Pigmente aufgrund ihrer Syntheseverfahren, der dabei gegebenenfalls verwendeten organischen Lösungsmittel oder wegen bestimmter struktureller Merkmale der Ausgangskomponenten polychlorierte Biphenyle (PCB) enthalten können (siehe R. Anliker, Swiss Chem. 3 (1981), 17-23 (deutsch) oder 25-29 (englisch); W. Herbst und K. Hunger in "Industrielle Organische Pigmente", VCH-Verlag, Weinheim 1987, S. 577-578). Zur Erfassung dieser Verunreinigungen in Pigmenten wurden unter Führung der farbenproduzierenden Industrie (ETAD) spezielle Analysenmethoden entwickelt und empfohlen (Bankmann et al., J. Soc. Dyers & Colourists 100 (1984) 118-123; Bankmann et al., Chemosphere 13 (1984) 499-506). Weniger die Toxizität oder das karzinogene Potential, sondern vor allem die Persistenz und bioakkumulativen Eigenschaften der polychlorierten Biphenyle haben dazu geführt, nicht nur die Herstellung dieser ehemals technisch breit genutzten Verbindungsklasse völlig einzustellen, sondern auch den Vertrieb von Produkten und Zubereitungen, die PCB als Verunreinigung enthalten, Beschränkungen und Kontrollen zu unterwerfen. Entsprechende gesetzliche Auflagen wurden in den letzten Jahren verschärft und die in den Handelsprodukten zugelassenen Grenzwerte an polychlorierten Biphenylen drastisch erniedrigt. So wurde der Grenzwert beispielsweise in den USA auf maximal 25 mg PCB im Jahresmittel pro kg eines in den Handel gebrachten Stoffes festgesetzt. Es zeigte sich nun, daß vor allem Monoazopigmente auf Basis von Di- oder Trichloranilinen als Diazokomponenten bei ihrer Herstellung nach den bisher praktizierten großtechnischen Kupplungsverfahren mit PCB-Gehalten von deutlich mehr als 25 µg/g anfallen.

In der Literatur werden zahlreiche Methoden beschrieben, um verunreinigte Flüssigkeiten oder Feststoffe von polychlorierten Biphenylen weitgehend zu befreien. Dabei wird der PCB-Anteil entweder durch Lösungsmittelextraktion entfernt oder durch Veränderung der chemischen Struktur der polychlorierten Biphenyle abgebaut ("inertisiert").

Zur letztgenannten Methodik zählen Verfahren der Dehalogenierung, beispielsweise mit Alkalimetallen, Alkalimetallhydroxiden, Alkalimetallverbindungen von Polyalkylenglykolethern oder auch Verfahren mit Schwefel, sowie Verfahren des katalysierten oxidativen Abbaus oder Abbaus durch Zufuhr thermischer, photolytischer oder elektrischer Energie. Da polychlorierte Biphenyle jedoch zu den ausgesprochen reaktionsträgen organischen Verbindungen zählen, ist es in der Regel unvermeidlich, daß bei den letztgenannten scharfen Reinigungsmethoden auch eine Schädigung der zu reinigenden organischen Pigmente eintritt, so daß diese Methoden für eine nachträgliche Reinigung von Pigmenten praktisch ungeeignet sind.

Die oben erwähnten Reinigungsverfahren durch Lösungsmittelbehandlung könnten dagegen in ausgewählten Fällen auch auf organische Pigmente übertragen werden. So wird etwa in der EP-B-00 63 321 beschrieben, daß man rohe organische Pigmente durch Behandlung bei 50 bis 180°C mit dem Gemisch eines hydrophilen und eines hydrophoben organischen Lösungsmittels, wobei die Lösungsmittel nur begrenzt miteinander mischbar sind, in Produkte hoher Reinheit überführen kann. Dabei sammeln sich die Verunreinigungen in einer der organischen Phasen. Diese und ähnliche Reinigungsverfahren eignen sich teilweise für Pigmente mit sehr guter Lösungsmittelechtheit und für Pigmente, bei denen mit der Lösungsmittelbehandlung häufig zusätzlich eine Verbesserung der anwendungstechnischen Eigenschaften des nach der Synthese anfallenden Rohpigments erzielt werden kann. Allerdings können mit der Lösungsmittelbehandlung Pigmentverunreinigungen, wie z. B. PCB, meist nur unvollständig erfaßt werden, da diese einerseits an der Oberfläche der Pigmentteilchen adsorptiv haften, andererseit in Agglomeraten eingeschlossen sind. Für Pigmente geringerer Lösungsmittelbeständigkeit, wie etwa einfach strukturierte Monoazopigmente ist die Lösungsmittelbehandlung ohnehin wenig geeignet. Diese Pigmente fallen bereits nach der Synthese in einer Form an, die die gewünschten anwendungstechnischen Eigenschaften besitzt. Eine Nachbehandlung mit organischen Lösungsmitteln verändert die physikalischen Eigenschaften der Monoazopigmente und auch deren Koloristik meist in unerwünschter Weise. Erschwerend kommt der Umstand hinzu, daß in allen Reinigungsverfahren mit organischen Lösungsmitteln bei deren Rückgewinnung die darin angereicherten Verunreinigungen wiederum entfernt und vernichtet werden müssen. Gerade letzteres ist im Falle von PCB - wie bereits dargelegt - mit größerem Aufwand verbunden.

Wegen der genannten Probleme ist es besonders wünschenswert, Monoazopigmente herzustellen, die bereits nach der Synthese so geringe Anteile an PCB enthalten, daß eine nachträgliche Reinigung nicht mehr erforderlich ist.

Gegenstand der Erfindung sind Monoazopigmente der allgemeinen Formel (I), 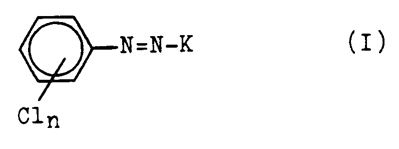
worin K den Rest einer CH-aciden Kupplungskomponente aus der Acetessigsäurearylamid- oder Naphtholreihe und n 2 oder 3 darstellt, mit einem Gehalt von höchstens 25 µg an polychlorierten Biphenylen mit mindestens 4 Chloratomen (PCB) pro g Pigment, bestimmt in der Weise, daß das Pigment zunächst in konzentrierter Schwefelsäure gelöst wird, die PCB-Anteile dann in ein unpolares organisches Lösungsmittel übergeführt und darin nach bekannten Verfahren analysiert werden.

Zur quantitativen Erfassung der PCB-Verunreinigungen, und zwar einschließlich der okklusiv und adsorptiv an das Pigment gebundenen Anteile, wird eine Probe des zu analysierenden Pigmentes in konzentrierter Schwefelsäure gelöst, und die chlorierten Biphenyle werden dann in einem kombinierten Extraktions-/Reinigungsverfahren (etwa durch Chromatographie) in ein unpolares Lösungsmittel wie aliphatische Kohlenwasserstoffe, insbesondere n-Hexan, übergeführt. In der erhaltenen organischen Lösung wird der PCB-Gehalt anschließend nach bekannten Methoden, z. B. gaschromatographisch, quantitativ bestimmt, wie es z. B. am Ende des Beispiels 1 näher ausgeführt wird.

Gegenstand der Erfindung ist auch das Verfahren zur Herstellung der erfindungsgemäßen Monoazopigmente der Formel (I) durch Azokupplung eines Dichlor- oder Trichlorbenzoldiazoniumsalzes oder eines Gemisches mehrerer derartiger Diazoniumsalze mit mindestens einer CH-aciden Kupplungskomponente H-K aus der Acetessigsäurearylamid- oder Naphtholreihe in wäßrigem Medium, dadurch gekennzeichnet,
a) daß die Azokupplung durch Zugabe der Diazoniumsalzlösung zu einer Suspension oder Lösung der Kupplungskomponente oder durch gleichzeitiges Zudosieren der wäßrigen Suspensionen oder Lösungen des Diazoniumsalzes und der Kupplungskomponente in die Reaktionsmischung erfolgt,
b) daß die Azokupplung bei einem pH-Wert oder in einem pH-Wertbereich von weniger als pH 7 erfolgt und
   b1) zwischen pH 4 und 7 während und nach der Azokupplung weniger als 0,05 Mol-%, vorzugsweise weniger als 0,02 Mol-%,
   b2) bei pH 2 bis 4 während der Azokupplung weniger als 5 Mol-%, vorzugsweise weniger als 0,05 Mol-% und
   b3) bei pH < 2 während der Azokupplung weniger als 25 Mol-%, vorzugsweise weniger als 5 Mol-%,
   Diazoniumsalz in der Reaktionsmischung nachweisbar ist und in den pH-Bereichen b2) und b3) mehr als 0,05 Mol-% Diazoniumsalz nicht länger als insgesamt 8 Stunden, mehr als 5 Mol-% Diazoniumsalz nicht länger als insgesamt 4 Stunden und mehr als 15 Mol-% Diazoniumsalz nicht länger als insgesamt 2 Stunden vorhanden ist, wobei die Mol-% Diazoniumsalz jeweils auf die Summe der Molzahlen von in der Reaktionsmischung vorhandener Kupplungskomponente und bereits entstandenem Pigment bezogen sind,
c) daß die Azokupplung bei einer Temperatur oder Temperaturen von 0 bis 50°C, vorzugsweise 20 bis 40°C, erfolgt,
d) daß die Azokupplung unter Ausschluß von Nitritionen erfolgt und
e) daß die Azokupplung gegebenenfalls in Gegenwart von Kupplungshilfsmitteln oder Kupplungsbeschleunigern durchgeführt wird.

Das erfindungsgemäße Verfahren ermöglicht die Herstellung von Monoazopigmenten, die im Vergleich zu den jeweiligen, in herkömmlicher Weise hergestellten Monoazopigmenten nach der Synthese mit erheblich verringertem Gehalt an PCB erhalten werden. Der PCB-Gehalt der erfindungsgemäß hergestellten Pigmente beträgt höchstens 25 µg pro g Pigment.

Geeignete Diazokomponenten für das erfindungsgemäße Verfahren sind beispielsweise 2,3-Dichloranilin, 2,4-Dichloranilin, 2,5-Dichloranilin, 2,6-Dichloranilin, 3,4-Dichloranilin, 3,5-Dichloranilin, 2,3,4-Trichloranilin, 2,3,5-Trichloranilin, 2,3,6-Trichloranilin, 2,4,5-Trichloranilin, 2,4,6-Trichloranilin und 3,4,5-Trichloranilin, wobei 2,4-und 2,5-Dichloranilin sowie 2,4,5-Trichloranilin bevorzugte Diazokomponenten darstellen.

Geeignete Kupplungskomponenten für das erfindungsgemäße Verfahren sind CH-acide Verbindungen aus der Acetessigsäurearylamid- oder Naphtholreihe. Von besonderem Interesse sind als Kupplungskomponenten Acetessigsäurearylamide, wie Acetessigsäureanilid, das am Phenylring durch einen oder mehrere, vorzugsweise 1 bis 3, der Reste Methyl, Methoxy, Ethoxy, Nitro und Chlor substituiert sein kann und am Phenylring einen ankondensierten 5- oder 6-gliedrigen Heterocyclus aufweisen kann, sowie Naphthol oder Naphtholderivate, wie 2-Hydroxy-3-naphthoesäure und 2-Hydroxy-3-naphthoesäure-N-arylamide, beispielsweise 2-Hydroxy-3-naphthoesäure-N-phenyl-amid, das am Phenylring durch einen oder mehrere der Reste Methyl, Methoxy, Ethoxy, Nitro, Alkanoylamino, wie Acetamino, Aroylamino, wie Benzoylamino, und Chlor substituiert sein kann und am Phenylring einen ankondensierten 5- oder 6-gliedrigen Heterocyclus aufweisen kann.

Bevorzugte Kupplungskomponenten sind 5-Acetoacetylaminobenzimidazolone oder insbesondere 2-Hydroxy-3-naphthoesäure-N-arylamide, wie 2-Hydroxy-3-naphthoesäureanilid, 2-Hydroxy-3-naphthoesäure-N-(2- oder 4-methylphenyl)-amid, 2-Hydroxy-3-naphthoesäure-(2-methoxy- oder 2-ethoxyphenyl)-amid, 2-Hydroxy-3-naphthoesäure-N-(2,5-dimethoxyphenyl)-amid und 5-(2-Hydroxy-3-naphthoylamino)-benzimidazol-2-on.

Die Kupplung der Diazokomponente mit der Kupplungskomponente erfolgt bei 0 bis 50°C, vorzugsweise 20 bis 40°C, in Abwesenheit von Nitritionen, wobei vorzugsweise eine Temperatur vermieden wird, bei der eine sehr geringe Reaktionsgeschwindigkeit vorliegt und Reaktionszeiten von mehr als 8 Stunden erforderlich sind. Die Azokupplung wird bei pH-Werten unter 7 durchgeführt und kann sowohl in einem gepufferten System in einem sehr engen pH-Bereich oder weitgehend ohne Pufferung in einem breiten pH-Bereich erfolgen. Bei einer bevorzugten Variante des Verfahrens läßt man eine wäßrig-mineralsaure Lösung des Diazoniumsalzes zur wäßrigen Suspension der fein verteilten Kupplungskomponente im pH-Bereich zwischen 4 und 7, vorzugsweise bei 4,5 bis 6, gegebenenfalls in Gegenwart kupplungsbeschleunigender Hilfsmittel zutropfen oder zulaufen, wobei die Geschwindigkeit der Zugabe der Diazoniumsalzlösung so gesteuert wird, daß die Menge an nachweisbarem Diazoniumsalz in dem Reaktionsgemisch weniger als 0,05 Mol-%, vorzugsweise weniger als 0,02 Mol-%, bezogen auf die Summe der Molzahlen von im Reaktionsgemisch vorhandener Kupplungskomponente und bereits gebildetem Pigment, beträgt.

Die Abwesenheit von Diazoniumionen bzw. deren geringer zeitweiliger Überschuß im Bereich der angegebenen Nachweisgrenzen wird im Verlauf der Kupplung durch häufige Tüpfelproben mit geeigneten Kupplern, beispielsweise H-Säure oder N-(1-Naphthyl)-ethylendiamin, oder durch elektrochemische Meßverfahren, beispielsweise potentiometrische Messungen, oder durch optische Meßmethoden, beispielsweise Remissionsmessung der Pigmentsuspension, verfolgt und geregelt, wobei die Steuerung des Zulaufs der Diazoniumsalzlösung auch automatisch erfolgen kann.

Die angegebenen pH-Grenzen werden in dem bevorzugten Verfahren durch geeignete Puffersysteme eingehalten, wobei diese vorzugsweise bereits bei der Bereitung der Suspension der Kupplungskomponente gebildet werden.

Zur Aufrechterhaltung des vorgeschriebenen pH-Bereichs darf der häufig praktizierte kontinuierliche oder diskontinuierliche Zulauf von wäßrigen Basenlösungen, wie etwa verdünnter wäßriger Natronlauge, nicht angewendet werden, da hierbei lokale hohe Konzentrationen der zudosierten Base, vor allem im Bereich der Einlaufstelle, unvermeidlich sind. Der lokale Überschuß an Basen ist unter anderem auch ein Grund, weshalb die Kupplungsvariante ausgeschlossen wird, in der der Zulauf der alkalischen Lösung der Kupplungskomponente zur vorgelegten Diazoniumsalzlösung erfolgt und ein lokaler Alkaliüberschuß im Reaktionsbereich der Diazoniumionen kaum vermieden werden kann.

Gegen Ende der Azokupplung ist darauf zu achten, daß kein unkontrolliert hoher Überschuß an Diazoniumsalz zugegeben wird. Auch ein großer Überschuß an insgesamt eingesetzter Kupplungskomponente ist zu vermeiden, weil dies sonst einen hohen Anteil an nicht umgesetzter Kupplungskomponente als Verunreinigung in dem isolierten Pigment zur Folge hat. Vorzugsweise wird die Azokupplung mit einem Überschuß an Kupplungskomponente von höchstens 5 Mol-% pro Mol Pigment durchgeführt.

Die Azokupplung kann in einer anderen bevorzugten Variante des Verfahrens mit geringerer Pufferung durchgeführt werden, wobei die Reaktion dann in der Regel bei einem pH-Wert von 7 bis 5 beginnt, mit zunehmendem Verlauf infolge der Zugabe der mineralsauren Diazoniumsalzlösung, jedoch den pH-Wert von 4 unterschreitet. Im Bereich unterhalb von pH 4, insbesondere unterhalb pH 3, ist die Reaktionsgeschwindigkeit im Vergleich zu höheren pH-Werten stark vermindert. Es empfiehlt sich daher, die Reaktionsgeschwindigkeit durch Zusatz von kupplungsbeschleunigenden Hilfsmitteln, insbesondere Tensiden, vorzugsweise ionischen Tensiden, zu erhöhen. Dennoch ist es in dem pH-Bereich unterhalb von pH 4 wegen der verminderten Reaktivität der Kupplungskomponente schwierig, die Reaktion ohne zeitweiligen Überschuß an Diazoniumsalz durchzuführen. Andererseits nimmt die PCB-Bildung in Richtung kleinerer pH-Werte ebenfalls ab, und es können größere Mengen an Diazoniumsalz in der Reaktionsmischung toleriert werden. Erfindungsgemäß wird der Zulauf der Diazoniumsalzlösung während der Azokupplung so gesteuert, daß bei einem pH-Wert von 2 bis 4 ein zeitweiliger Überschuß von weniger als 5 Mol-%, vorzugweise weniger als 0,05 Mol-% Diazoniumsalz und bei einem pH-Wert < 2 ein zeitweiliger Überschuß von weniger als 25 Mol-%, vorzugsweise weniger als 5 Mol-%, besteht, wobei die Mol-% auf die Summe der Molzahlen von in der Reaktionsmischung vorhandener Kupplungskomponente und bereits entstandenem Pigment bezogen sind, und eine Menge von mehr als 5 Mol-% Diazoniumsalz nicht länger als 4 Stunden, vorzugsweise nicht länger als 2 Stunden, aufrechterhalten wird.

Es ist bei dem erfindungsgemäßen Verfahren möglich, daß die Menge an Diazoniumsalz gegen Ende der maximalen Zeitgrenze noch oberhalb der angegebenen Grenzwerte liegt. Dies kann vor allem dann vorkommen, wenn die Menge an eingesetzter Kupplungskomponente noch nicht vollständig reagiert hat oder wenn ein Überschuß an Diazoniumsalz, bezogen auf die Stöchiometrie der Kupplungsreaktion, eingesetzt wurde. In diesen Fällen wird der Reaktionsansatz unverzüglich aufgearbeitet, um weitere PCB-Bildung zu verhindern, die durch erhöhte Mengen an freiem Diazoniumsalz unter Kupplungsbedingungen begünstigt wird.

In einer anderen Variante des erfindungsgemäßen Verfahrens wird die Azokupplung ganz bei pH-Werten unter 4 durchgeführt.

Die optimale Zulaufrate der Diazoniumsalzlösung und die optimale Temperatur für die Azokupplung können durch faktorielle Versuchsplanung ermittelt werden.

Zur Beschleunigung der Reaktionsgeschwindigkeit von Kupplungen im sauren Medium, vor allem im pH-Bereich von weniger als 3, hat es sich als vorteilhaft erwiesen, oberflächenaktive Verbindungen, vorzugsweise ionogene Tenside, d.h. anionaktive oder kationaktive Tenside, zuzusetzen.

Geeignete anionaktive Tenside sind beispielsweise primäre Fettalkoholsulfate oder -ethersulfate, Alkylsulfonate, Alkylsulfonamidocarbonsäuren, Acylaminocarbonsäuren, Fettsäurekondensationsprodukte, wie Fettsäuretauride, sowie Alkylarylsulfonate und Alkylarylethersulfate, insbesondere Sulfobernsteinsäureester ethoxylierter Nonylphenolnovolake.

Als kationaktive Tenside kommen beispielsweise tertiäre Amine, die auch kettenendständige freie Aminogruppen tragen können oder quarternäre Ammoniumsalze in Betracht.

Die Azokupplungen und die Fällung der Kupplungskomponenten können im übrigen in Gegenwart zusätzlicher üblicher Hilfsmittel, wie vor allem ionogenen Tensiden durchgeführt werden.

Die Herstellung der Azopigmente kann nach dem erfindungsgemäßen Verfahren in den üblichen Apparaturen erfolgen. Es erwies sich aber als besonders günstig, die Azokupplung in einem statischen oder dynamischen Mischer als Reaktor durchzuführen, wobei die Lösungen des Diazoniumsalzes und der Kupplungskomponente gleichzeitig zudosiert werden, oder die Lösung des Diazoniumsalzes im Reaktor auf eine unmittelbar vor dem Eintritt in den Reaktor gefällte Suspension der Kupplungskomponente trifft. Das im Mischer gebildete Kupplungsgut wird nach kurzen Verweilzeiten, die sich in der Größenordnung von unter 1 Sekunde bis zu wenigen Minuten bewegen, als Pigmentsuspension abgeführt, die in üblicher Weise weiterverarbeitet wird. Die erhaltenen wäßrigen Pigmentsuspensionen werden nach der Synthese in der Regel filtriert und die Pigmente salzfrei gewaschen. Der erhaltene wäßrige Preßkuchen wird entweder direkt zum Pigmentieren verwendet, oder nach dem Trocknen zunächst zu einem Pulver verarbeitet.

Da die erfindungsgemäß hergestellten Pigmente einen Gehalt von höchstens 25 µg/g an polychlorierten Biphenylen enthalten, benötigen sie keine zusätzliche Reinigung zur Entfernung von PCB, sondern können direkt in den Anwendungsbereichen eingesetzt werden, bei denen ein derartig niedriger PCB-Gehalt im Pigment gefordert wird. Das erfindungsgemäße Verfahren ist daher ein sehr effektives und umweltfreundliches Verfahren zur Herstellung PCB-armer Monoazopigmente.

Die erfindungsgemäßen Pigmente können mit Vorteil als Farbmittel in natürlichen und synthetischen Materialien verwendet werden. Insbesondere eignen sie sich zum Pigmentieren von Druckfarben für den Buch/Offsetdruck, Tiefdruck, Flexodruck und andere spezielle Druckverfahren, zur Herstellung pigmentierter Lacke auf Basis oxidativ trocknender oder ofentrocknender Systeme, zur Herstellung von Dispersionsfarben, zum Pigmentieren von Kunststoffen, wie beispielsweise Polyvinylchlorid, Polyolefine, Polystyrole und deren Copolymerisate, Polymethylmethacrylate, Polyurethane, Polycarbonate, Polyester, Cellulosederivate, Elastomere oder Duroplaste sowie als Farbmittel für die Spinnfärbung. Die erfindungsgemäßen Pigmente können auch für spezielle Applikationsgebiete eingesetzt werden, etwa als Farbmittel für elektrophotographische Toner, für Farbstrahldruckverfahren (z.B. Ink-Jet-Verfahren) oder Thermotransferbänder. Der geringe PCB-Gehalt der erfindungsgemäß hergestellten Pigmente gestattet ferner deren Verwendung beim Anfärben von Kosmetikartikeln.

In den folgenden Beispielen beziehen sich Teile und Prozentangaben auf das Gewicht, insofern nichts anderes angezeigt ist. Volumenteile verhalten sich zu Gewichtsteilen wie Liter zu kg.

### Beispiele

1) 16,3 Teile 2,5-Dichloranilin werden in 37 Vol.-Teilen 30 %iger Salzsäure etwa 8 Stunden bis zur vollständigen Hydrochloridbildung angerührt. Nach Zugabe von Eis wird bei -5 bis 0°C durch Zulauf von 14 Vol.-Teilen 38 %iger Natriumnitritlösung diazotiert. Nach einstündigem Rühren wird mit Wasser auf 400 Vol.-Teile verdünnt, der Nitritüberschuß mit Amidosulfonsäure zerstört, Kieselgur als Filterhilfsmittel zugefügt und die Diazoniumsalzlösung filtriert.
   In einem zweiten Gefäß werden 28,8 Teile 2-Hydroxy-3-naphthoesäure-N-(4-methyl-phenyl)-amid in 200 Teilen Wasser angeschlämmt und bei 80 bis 90°C durch Zugabe von 18 Vol.-Teilen 33 %iger Natronlauge gelöst. Die geklärte alkalische Lösung wird im Kuppelgefäß vorgelegt, auf 10°C abgekühlt und die Kupplungskomponente nach Zugabe von 0,5 Teilen eines Talgfett-N-trimethylendiamin-N′-propylamins mit 14 Vol.-Teilen Eisessig in fein verteilter Form ausgefällt. Man erwärmt die Suspension der Kupplungskomponente auf 30°C und tropft innerhalb von 2 bis 3 Stunden die Diazoniumsalzlösung zu. Der im Verlauf der Kupplung von 5,5 auf 4 abfallende pH-Wert wird durch portionsweise Zugabe von Kalziumcarbonat in dem genannten pH-Bereich gehalten. Während der gesamten Kupplung sind durch Tüpfelproben mit H-Säure keine Diazoniumionen im Reaktionsgemisch nachweisbar. Nach beendetem Zulauf des Diazoniumsalzes rührt man die Suspension 30 Minuten bei 30°C nach, erhitzt dann kurz auf 98°C, filtriert das Pigment, wäscht salzfrei und trocknet bei 60°C. Eine Probe des so erhaltenen Kupplungsprodukts (C.I. Pigment Red 10) wird mit einer Standardlösung zweier bekannter chlorierter Biphenyle dotiert, in etwa 96 %iger Schwefelsäure gelöst und die erhaltene Lösung in dem nachfolgend beschriebenen kombinierten Extraktions-/Reinigungsverfahren mit soviel Kieselgel vermischt, daß dieses rieselfähig bleibt. Diese Mischung wird in ein Chromatographierohr übergeführt, das bereits mit zwei Kieselgelreinigungszonen beschickt wurde (eine mit KOH beladene Kieselgelschicht über einer mit Oleum beladenen Kieselgelzone) und anschließend mit n-Hexan eluiert. Im Eluat werden die chlorierten Biphenyle gaschromatographisch nach Trennung an einer Kapillarsäule durch Elektronenfang (electron capture detection = ECD) oder massenselektive Detektion gegen einen inneren PCB-Standard quantitativ bestimmt. Die dabei bestimmten Anteile an PCB betragen 20 µg, bezogen auf 1 g Pigment (20 ppm PCB). Die Quantifizierung kann auch nach anderen analytischen Verfahren, etwa durch Hochdruckflüssigkeitschromatographie (HPLC) erfolgen.
2) **Vergleichsbeispiel:** Stellt man das in Beispiel 1 genannte Monoazopigment nach der im BIOS-Report 1661, Seite 127 beschriebenen Betriebsvorschrift bei einer Kupplungstemperatur von 78°C dar, so erhält man ein Produkt mit einem analysierten PCB-Gehalt von 50 bis 60 µg/g (50 bis 60 ppm).
3) 16,3 Teile 2,5-Dichloranilin werden entsprechend der Vorschrift nach Beispiel 1 diazotiert und nach Zerstören des Nitritüberschusses und Klären der erhaltenen Diazoniumsalzlösung 5 Vol.-Teile Eisessig zur Pufferbildung zugesetzt. In einem anderen Reaktionsgefäß bereitet man eine alkalische Lösung der Kupplungskomponente durch Eintragen von 27 Teilen 2-Hydroxy-3-naphthoesäureanilid in eine auf 60°C erwärmte Lösung von 9 Teilen Natriumhydroxid in 200 Teilen Wasser. Die Diazoniumsalzlösung und die Lösung der Kupplungskomponente werden auf gleiche Volumina eingestellt und so rasch in einen statischen oder dynamischen Mischer, in dem turbulente Strömungsverhältnisse vorherrschen, eindosiert, daß die den Mischer verlassende Suspension des Kupplungsprodukts nach der Tüpfelprobe mit H-Säure keinen oder eine gerade noch erkennbare Diazoniumsalzmenge aufweist. Die Temperatur im Mischer beträgt 35 bis 45°C, und der pH-Wert liegt bei 4,5 ± 0,3. Das nach der Kupplung in der üblichen Weise isolierte C.I. Pigment Red 2 weist einen PCB-Gehalt von 12 bis 21 µg/g auf.
4) **Vergleichsbeispiel:** Eine entsprechend Beispiel 3 hergestellte Lösung von diazotiertem 2,5-Dichloranilin wird im Laufe einer Stunde unter die Oberfläche einer entsprechend Beispiel 3 hergestellten alkalischen Lösung (pH > 12) von 2-Hydroxy-3-naphthoesäureanilid zudosiert. Nach beendetem Zulauf erhitzt man die Suspension auf filtriert das Pigment ab, wäscht und trocknet. Das so erhaltene Pigment weist einen PCB-Gehalt von mehr als 200 µg/g auf.
5) **Vergleichsbeispiele:** Stellt man das im Beispiel 3 erwähnte Pigment C.I. Pigment Red 2 nach der Vorschrift aus BIOS-Report 1661, S. 129 durch Zulauf der alkalischen Lösung von 2-Hydroxy-3-naphthoesäureanilid unter die Oberfläche der sauren Diazoniumsalzlösung her, wobei der pH-Wert im Verlauf der Kupplung auf Werte über 8 ansteigt, so erhält man ein Pigment mit einem PCB-Gehalt von mehr als 50 µg/g. Erfolgt die Azokupplung unter Zulauf der Diazoniumsalzlösung zur alkalischen Lösung (pH >11) der Kupplungskomponente, so erhält man ein Pigment mit einem Gehalt an PCB von mehr als 100 µg/g.
6) 16,3 Teile 2,5-Dichloranilin werden entsprechend Beispiel 1 diazotiert. In einem zweiten Gefäß werden 30,5 Teile 2-Hydroxy-3-naphthoesäure-N-(2-methoxyphenyl)-amid in einem 60°C warmen Gemisch von 18 Vol.-Teilen 33 %iger Natronlauge und 200 Teilen Wasser gelöst. Die geklärte alkalische Lösung der Kupplungskomponente wird mit Wasser auf das doppelte Volumen verdünnt, mit Eis auf 5 bis 10°C abgekühlt und nach Zugabe von 2 Teilen des Natriumsalzes einer Alkylsulfonsäure unter intensivem Rühren durch Zulauf von 14 Vol.-Teilen Eisessig ausgefällt. Man setzt der Suspension der Kupplungskomponente 4 Teile Kalziumcarbonat zu und kuppelt durch Zulauf der nitritfreien, geklärten Diazoniumsalzlösung bei 30°C innerhalb von 2 Stunden im pH-Bereich von 5,5 bis 3,6, wobei allenfalls gegen Ende des Zulaufs, d.h. im pH-Bereich von < 4, eine durch die Tüpfelprobe mit H-Säure erkennbare Diazoniumsalzmenge von 2 bis 3 Mol.-%, bezogen auf die gesamte Molmenge an eingesetzter Kupplungskomponente, auftritt. Man läßt eine weitere Stunde bei 30°C rühren, wobei die eventuell zeitweise aufgetretene nachweisbare Diazoniumsalzmenge verschwindet, filtriert das Kupplungsprodukt ab, wäscht salzfrei und trocknet. Das erhaltene C.I. Pigment Red 9 weist einen PCB-Gehalt von weniger als 10 µg/g auf.
7) Setzt man die Diazoniumsalzlösung des 2,5-Dichloranilins unter gleichen Reaktionsbedingungen wie in Beispiel 6 beschrieben mit einer aus 31,8 Teilen 2-Hydroxy-3-naphthoesäure-N-(2-ethoxyphenyl)-amid bereiteten Suspension um, so erhält man wiederum ein Kupplungsprodukt (C.I. Pigment Orange 22) mit einem PCB-Gehalt von weniger als 20 µg/g.
8) **Vergleichsbeispiel:** Bei der Synthese von C.I. Pigment Red 9 entsprechend der Vorschrift aus BIOS-Report 1661, S. 128, wobei im Vergleich zu Beispiel 6 der Zulauf der Diazoniumsalzlösung zur schwach alkalischen Suspension der Kupplungskomponente bei einem pH-Wert von 8 bis 8,5 erfolgt, erhält man ein Kupplungsprodukt mit einem PCB-Gehalt von mehr als 100 µg/g Pigment.
9) 16,3 Teile 2,5-Dichloranilin werden wie in Beispiel 1 beschrieben diazotiert, eventuell vorhandener Nitritüberschuß zerstört und die Lösung geklärt. Im Kuppelgefäß bereitet man bei 70°C eine Lösung von 33,5 Teilen 2-Hydroxy-3-naphthoesäure-N-(2,5-dimethoxyphenyl)-amid in einem Gemisch von 200 Teilen Wasser, 0,5 Teilen Alkylsulfonat und 18 Vol.-Teilen 33 %iger Natronlauge. Die so erhaltene Lösung wird auf 10°C abgekühlt und die Kupplungskomponente durch rasche Zugabe von 14 Vol.-Teilen Eisessig, in dem 2 Teile Dimethyldiallylammoniumchlorid gelöst sind, unter gutem Rühren ausgefällt. Man kuppelt bei 30 bis 40°C durch Zulauf der Diazoniumsalzlösung innerhalb von 2 Stunden, wobei der pH-Wert der Reaktionsmischung durch gelegentliche Zugabe von Kreidepulver bei 4 bis 4,5 gehalten wird. Der gegen Ende des Zulaufs auftretende Diazoniumsalzüberschuß von etwa 0,01 bis 0,02 Mol-%, bezogen auf die Summe von Pigment und noch nicht umgesetzter Kupplungskomponente, verschwindet innerhalb des einstündigen Nachrührens. Das in üblicher Weise isolierte C.I. Pigment Braun 1 weist einen analytisch ermittelten Gehalt an polychloriertem Biphenylen von 15 µg pro Gramm Pigment auf.
10) 16,2 Teile 2,5-Dichloranilin werden analog Beispiel 1 diazotiert und die geklärte Diazoniumsalzlösung, die frei von Nitritionen ist, auf eine Temperatur von 5°C und mit Wasser auf ein Volumen von 400 Vol.-Teilen eingestellt. In einem zweiten Gefäß werden 33 Teile 5-(2-Hydroxy-3-naphthoyl-amino)-benzimidazol-2-on in 300 Teilen Wasser angerührt und durch Zugabe von 23 Vol.-Teilen 33 %iger Natronlauge gelöst. Die alkalische Lösung wird geklärt und mit Wasser auf 400 Vol.-Teile verdünnt. Zur Azokupplung werden die beiden hergestellten Lösungen gleichzeitig im Laufe einer Stunde in einen statischen Mischer eindosiert, wobei die den Mischer verlassende Suspension durch rasches Umpumpen über ein größeres Vorratsgefäß im Kreislauf wieder in den Mischer zurückgeführt wird. Die Kupplungssuspension wird während des Umpumpens bei einer Temperatur von 8 bis 10°C gehalten; der pH-Wert liegt im Bereich von 5,1 bis 5,8. Während des Zudosierens der Lösungen beider Reaktionspartner tritt im Vorratsgefäß allenfalls gegen Ende eine nachweisbare Menge an Diazoniumsalz auf, die etwa 0,02 Mol-%, bezogen auf die gesamte Molmenge an Kupplungsprodukt beträgt. Dieser zeitweilige Überschuß verschwindet rasch im Laufe des einstündigen Nachrührens, das ohne weiteres Umpumpen bei 30 bis 40°C erfolgt. Man erhitzt anschließend auf 95°C, hält eine Stunde bei dieser Temperatur, filtriert das Pigment und wäscht mit Wasser salzfrei. Eine Probe des so erhaltenen Kupplungsprodukts wird getrocknet und analysiert: Der PCB-Gehalt beträgt 20 µg/g. Der übrige feuchte Pigmentpreßkuchen wird zur Überführung in eine farbstarke und kornweiche Pigmentform als 8 %ige wäßrige Suspension ein bis zwei Stunden einer thermischen Nachbehandlung bei 140°C unterworfen. Nach Abfiltrieren und Trocknen erhält man ein C.I. Pigment Brown 10 mit einem PCB-Gehalt von 19 µg/g.
11) **Vergleichsbeispiel:** Eine entsprechend Beispiel 1 erhaltene nitritfreie Diazoniumsalzlösung von 2,5-Dichloranilin wird durch Zulauf einer Puffermischung aus 36 Vol.-Teilen 33 %iger Natronlauge und 29 Vol.-Teilen Eisessig in 200 Teilen Wasser auf einen pH-Wert zwischen 4,5 und 4,2 eingestellt. Nach Zugabe von 1 Teil eines Reaktionsprodukts von Stearylalkohol mit 25 Moläquivalenten Ethylenoxid läßt man bei 5 bis 10°C eine alkalische Lösung von 5-(2-Hydroxy-3-naphthoylamino)-benzimidazol-2-on, die entsprechend Beispiel 10 hergestellt wurde, innerhalb von 2 Stunden zulaufen, wobei der pH-Wert allmählich von 5,2 bis 5,6 ansteigt. Der bei der Kupplung stets vorhandene Diazoniumsalzüberschuß verschwindet etwa 30 Minuten nach beendetem Zulauf der Kupplungskomponente. Man erhitzt danach auf 95°C, hält eine Stunde bei dieser Temperatur, filtriert, wäscht das Produkt mit Wasser salzfrei und trocknet es. Das nach diesem Verfahren erhaltene Pigment weist einen PCB-Gehalt von 150 bis 200 µg/g auf.
12) **Vergleichsbeispiel:** Man verfährt analog Beispiel 2 der deutschen Patentschrift Nr. 12 17 008 zur Herstellung von C.I. Pigment Brown 10. Danach wird die saure Diazoniumsalzlösung gleichzeitig mit der stark alkalischen Lösung der Kupplungskomponente zu einer im Kuppelgefäß vorgelegten Essigsäure-Natriumacetat-Puffermischung zugegeben. Dabei steigt der pH-Wert der Reaktionsmischung im Verlauf der Kupplung von etwa 5 auf 11 bis 12 an. Das nach beendeter Kupplung und Ansäuern isolierte Pigment weist einen PCB-Gehalt von deutlich mehr als 500 µg/g auf.
13) 16,2 Teile 2,5-Dichloranilin werden entsprechend Beispiel 1 diazotiert und zur Kupplung vorbereitet. In einem zweiten Gefäß werden 25 Teile 5-Acetoacetylaminobenzimidazol-2-on in 200 Teilen Wasser angeschlämmt und durch Zugabe von 20 Vol.-Teilen 33 %iger Natronlauge bei 20°C gelöst. Man kühlt auf 10°C ab und läßt die Lösung unter Rühren in ein eiskaltes Gemisch von 15 Vol.-Teilen Eisessig, 2 Teilen N,N-Dimethyl-N,N-diallyl-ammoniumchlorid in 200 Teilen Wasser einlaufen, wobei eine fein verteilte Suspension der Kupplungskomponente entsteht. Zu dieser Suspension läßt man die vorbereitete nitritfreie Diazoniumsalzlösung so zulaufen, daß bei der Tüpfelprobe mit H-Säure keine nachweisbare Menge an Diazoniumsalz im Kuppelgefäß auftritt, d.h. daß weniger als 0,01 Mol-% Diazoniumsalz, bezogen auf die Summe von im Kuppelgefäß vorhandener Kupplungskomponente und bereits gebildetem Pigment, vorhanden ist. Während des Zulaufs liegt der pH-Wert im Bereich von 5,5 bis 4,5. Nach beendeter Kupplung erhitzt man die Suspension auf 95°C, saugt das Pigment ab und wäscht es mit Wasser salzfrei. Eine getrocknete Probe des Pigments enthält 15 µg/g.
14) **Vergleichsbeispiel:** Das Monoazopigment aus Beispiel 13 wird entsprechend dem Verfahren der deutschen Patentschrift Nr. 23 47 532, Beispiel 1 hergestellt. Dabei kuppelt man durch Zulauf der alkalischen Lösung der Kupplungskomponente zur vorgelegten Diazoniumsalzlösung unter gleichzeitigem Zulauf einer Natriumacetatlösung, so daß der pH-Wert während der Kupplung bei pH 5 gehalten wird. Der PCB-Gehalt des nach dieser Kupplungsvariante erhaltenen Pigments beträgt 38 µg/g.
15) 40,3 Teile feinkristallines 2,4,5-Trichloranilin werden in einem Gemisch von 200 Teilen Wasser, 200 Vol.-Teilen 30 %iger Salzsäure und 0,5 Teilen eines Alkylsulfonats über Nacht angerührt. Nach Zugabe von Eis zur gebildeten Suspension des Hydrochlorids diazotiert man durch raschen Zulauf von 29 Vol.-Teilen 40 %iger Natriumnitritlösung und rührt eine Stunde mit Nitritüberschuß nach. Anschließend werden überschüssige Nitritionen mit Amidosulfonsäure zerstört und die Diazoniumsalzlösung geklärt. Im Kuppelgefäß werden 60 Teile 2-Hydroxy-3-naphthoesäure-N-(2-methylphenyl)-amid in 200 Teilen Wasser, dem 28 Vol.-Teile 33 %iger Natronlauge zugesetzt worden sind, bei 85°C gelöst. Die klare Lösung wird mit Eis auf 5°C abgekühlt und nach Zusatz von 3 Teilen des Umsetzungsprodukts aus Triethanolamin mit Ölsäurechlorid unter intensivem Rühren mit 30 Vol.-Teilen Eisessig versetzt. Der erhaltenen Suspension der frisch gefällten Kupplungskomponente setzt man noch 30 Vol.-Teile einer 10 %igen wäßrigen Lösung des Sulfobernsteinsäureesters eines Nonylphenolnovolakoxyethylates zu.
   Die Azokupplung erfolgt bei 20 bis 25°C durch Zulauf der Diazoniumsalzlösung zur Suspension der Kupplungskomponente innerhalb von 3 Stunden, wobei der pH-Wert von etwa 4,8 bis auf unter pH 1 fällt. Bei Unterschreiten des pH-Werts von 3,5 tritt in der Reaktionsmischung eine deutlich nachweisbare Menge an Diazoniumsalz auf, die mit 4 bis 5 Mol-%, bezogen auf die Summe der Molzahlen von in der Reaktionsmischung vorhandener Kupplungskomponente und bereits gebildetem Pigment, bestimmt wurde. Nach beendetem Zulauf wird die Reaktionsmischung auf 40°C erwärmt, wobei innerhalb einer Stunde der Diazoniumsalzüberschuß verschwindet. Man erhitzt danach auf 98°C, saugt das Pigment ab und trocknet. Das erhaltene C.I. Pigment Red 112 enthält einen PCB-Gehalt von 10 bis 12 µg/g.
16) 40,3 Teile 2,4,5-Trichloranilin werden entsprechend Beispiel 15 diazotiert und als Diazoniumsalzlösung zur Kupplung vorbereitet. In einem zweiten Gefäß werden 60 Teile der Kupplungskomponente entsprechend Beispiel 15 alkalisch gelöst und nach Zusatz von 1 Teil des Natriumsalzes einer Alkylsulfonsäure bei 5 bis 10°C mit 30 Vol.-Teilen Eisessig ausgefällt. Die Azokupplung erfolgt bei 40 bis 50°C durch Zulauf der nitritfreien Diazoniumsalzlösung zur Suspension der Kupplungskomponente innerhalb von 2 bis 3 Stunden, wobei bei Unterschreiten eines pH-Wertes von 2 ein Diazoniumsalzüberschuß von 5 bis 6 Mol-%, bezogen auf die Summe der Molzahlen von im Kuppelgefäß vorhandener Kupplungskomponente und bereits gebildetem Pigment auftritt. Beim Nachrühren nach beeendetem Zulauf der Diazoniumsalzlösung sinkt der Diazoniumsalzüberschuß innerhalb einer Stunde auf 2 Mol-% und innerhalb einer weiteren Stunde auf 0,5 Mol-% ab. Danach saugt man das Pigment ab, wäscht mit Wasser salzfrei und trocknet. Man erhält ein Kupplungsprodukt mit 18 µg PCB pro g Pigment.
17) **Vergleichsbeispiel:** 40,3 Teile 2,4,5-Trichloranilin werden entsprechend Beispiel 15 diazotiert und als Diazoniumsalzlösung zur Kupplung vorbereitet. Im Kuppelgefäß wird die Lösung von 60 Teilen 2-Hydroxy-3-naphthoesäure-N-(2-methylphenyl)-amid in einer Mischung von 200 Teilen Wasser und 28 Vol.-Teilen 33 %iger Natronlauge vorgelegt und nach Zugabe von 1 Teil Alkylsulfonat bei 5 bis 10°C mit 38 Vol.-Teilen 33 %iger Salzsäure unter Rühren ausgefällt. Die Azokupplung erfolgt bei 40 bis 50°C durch Zulauf der Diazoniumsalzlösung zur Suspension der Kupplungskomponente und gleichzeitigem Zutropfen von 15 %iger Natronlauge, mit der der pH-Wert bei 5 bis 5,5 gehalten wird. Nach Zulauf der Diazoniumsalzlösung wird auch die Zugabe der Natronlauge beendet, und man läßt bei 50°C bis zum Auskuppeln nachrühren. Nach üblicher Aufarbeitung erhält man ein Pigment mit einem PCB-Gehalt von 150 µg PCB pro g Pigment.
18) 32,6 Teile 2,4-Dichloranilin werden bei 30°C in einem Gemisch von 200 Vol.-Teilen Wasser und 60 Vol.-Teilen 30 %iger Salzsäure gelöst und nach dem Abkühlen auf 0°C durch raschen Zulauf von 27 Vol.-Teilen 40 %iger Natriumnitritlösung diazotiert. Nach einstündigem Rühren bei 10°C wird geklärt und eventueller Nitritüberschuß mit Aminosulfonsäure zerstört. Die so erhaltene Diazoniumsalzlösung wird bei 40°C und einem pH-Wert von 5,5 bis 4,5 einer entsprechend Beispiel 16 bereiteten Suspension von 60 Teilen 2-Hydroxy-3-naphthoesäure-N-(2methylphenyl)-amid in Gegenwart von 1 Teil Sulfobernsteinsäureester eines ethoxylierten Nonylphenolnovolakes zudosiert, wobei man die Zulaufgeschwindigkeit so steuert, daß beim Tüpfeln mit H-Säure kein oder nur ein schwacher Diazoüberschuß, entsprechend 0,01 bis 0,02 Mol-%, bezogen auf die Summe der Molzahlen von im Kuppelgefäß vorhandenen Kupplungskomponente und bereits gebildetem Pigment, nachweisbar ist. Nach etwa drei Stunden ist die Kupplung beendet und das erhaltene Rotpigment wird abgesaugt, mit Wasser salzfrei gewaschen und getrocknet. Es weist einen PCB-Gehalt von 15 bis 20 µg/g auf.

## Patentansprüche (Patentansprüche für folgende(n) Vertragsstaat(en): BE, CH, DE, FR, GB, IT, LI)

1. Monoazopigmente der allgemeinen Formel (I), 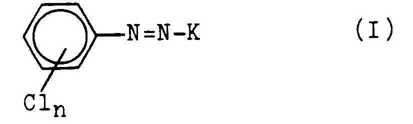 worin K den Rest einer CH-aciden Kupplungskomponente aus der Acetessigsäurearylamid- oder Naphtholreihe und n 2 oder 3 darstellt, mit einem Gehalt von höchstens 25 µg an polychlorierten Biphenylen mit mindestens 4 Chloratomen (PCB) pro g Pigment, bestimmt in der Weise, daß das Pigment zunächst in konzentrierter Schwefelsäure gelöst wird, die PCB-Anteile dann in ein unpolares organisches Lösungsmittel übergeführt und darin nach bekannten Verfahren analysiert werden.

2. Monoazopigment nach Anspruch 1, dadurch gekennzeichnet, daß die Diazokomponente des Monoazopigments 2,3-Dichloranilin, 2,4-Dichloranilin, 2,5-Dichloranilin, 2,6-Dichloranilin, 3,4-Dichloranilin, 3,5-Dichloranilin, 2,3,4-Trichloranilin, 2,3,5-Trichloranilin, 2,3,6-Trichloranilin, 2,4,5-Trichloranilin, 2,4,6-Trichloranilin oder 3,4,5-Trichloranilin und die Kupplungskomponente eine Verbindung aus der Acetessigsäurearylamid- oder Naphthol-Reihe ist.

3. Monoazopigment nach Anspruch 1 oder 2, dadurch gekennzeichnet, daß K für den Rest der Kupplungskomponente Acetessigsäureanilid, das am Phenylring durch 1 bis 3 Reste aus der Gruppe Methyl, Methoxy, Ethoxy, Nitro und Chlor substituiert ist, Acetessigsäureanilid, das am Phenylring einen ankondensierten fünf- oder sechsgliedrigen Ring aufweist, Naphthol, 2-Hydroxy-3-naphthoesäure oder 2-Hydroxy-3-naphthoesäure-N-arylamide steht.

4. Monoazopigment nach Anspruch 1, 2 oder 3, dadurch gekennzeichnet, daß die Kupplungskomponente ein 2-Hydroxy-3-naphthoesäure-N-phenylamid ist, das am Phenylring durch einen oder mehrere der Reste Methyl, Methoxy, Ethoxy, Nitro, Alkanoylamino, Aroylamino und Chlor substituiert sein kann und am Phenylring einen ankondensierten 5- oder 6-gliedrigen Heterocyclus aufweisen kann.

5. Verfahren zur Herstellung des erfindungsgemäßen Monoazopigments der Formel (I) nach Anspruch 1 durch Azokupplung eines Dichlor- oder Trichlorbenzoldiazoniumsalzes oder eines Gemisches mehrerer derartiger Diazoniumsalze mit mindestens einer CH-aciden Kupplungskomponente H-K aus der Acetessigsäurearylamid- oder Naphtholreihe in wäßrigem Medium, dadurch gekennzeichnet,
a) daß die Azokupplung durch Zugabe der Diazoniumsalzlösung zu einer Suspension oder Lösung der Kupplungskomponente oder durch gleichzeitiges Zudosieren der wäßrigen Suspensionen oder Lösungen des Diazoniumsalzes und der Kupplungskomponente in die Reaktionsmischung erfolgt,
b) daß die Azokupplung bei einem pH-Wert oder in einem pH-Wertbereich von weniger als pH 7 erfolgt und
b1) zwischen pH 4 und 7 während und nach der Azokupplung weniger als 0,05 Mol-%,
b2) bei pH 2 bis 4 während der Azokupplung weniger als 5 Mol-%
b3) bei pH < 2 während der Azokupplung weniger als 25 Mol-% Diazoniumsalz in der Reaktionsmischung nachweisbar ist und in den pH-Bereichen b2) und b3) mehr als 0,05 Mol-% Diazoniumsalz nicht länger als insgesamt 8 Stunden, mehr als 5 Mol-% Diazoniumsalz nicht länger als insgesamt 4 Stunden und mehr als 15 Mol-% Diazoniumsalz nicht länger als insgesamt 2 Stunden vorhanden ist, wobei die Mol-% Diazoniumsalz jeweils auf die Summe der Molzahlen von in der Reaktionsmischung vorhandener Kupplungskomponente und bereits entstandenem Pigment bezogen sind,
c) daß die Azokupplung bei einer Temperatur oder Temperaturen von 0 bis 50°C erfolgt,
d) daß die Azokupplung unter Ausschluß von Nitritionen erfolgt und
e) daß die Azokupplung gegebenenfalls in Gegenwart von Kupplungshilfsmitteln oder Kupplungsbeschleunigern durchgeführt wird.

6. Verfahren nach Anspruch 5, dadurch gekennzeichnet, daß für die Azokupplung mindestens eine der Bedingungen b1), b2) und b3) gilt und
b1) zwischen pH 4 und 7 während und nach der Azokupplung weniger als 0,02 Mol-%,
b2) bei pH 2 bis 4, während der Azokupplung weniger als 0,05 Mol-% und
b3) bei pH < während der Azokupplung weniger als 5 Mol-% Diazoniumsalz in der Reaktionsmischung nachweisbar ist.

7. Verfahren nach Anspruch 5 oder 6, dadurch gekennzeichnet, daß die Azokupplung bei einer Temperatur von 20 bis 40°C erfolgt.

8. Verfahren nach mindestens einem der Ansprüche 5 bis 7, dadurch gekennzeichnet, daß die Azokupplung in Gegenwart von anionaktiven oder kationaktiven Tensiden erfolgt.

9. Verwendung des nach mindestens einem der Ansprüche 1 bis 4 definierten Monoazopigments als Farbmittel in natürlichen und synthetischen Materialien.

10. Verwendung nach Anspruch 9 zum Pigmentieren von Druckfarben für den Buch/Offsetdruck, Tiefdruck, Flexodruck und andere spezielle Druckverfahren, zur Herstellung pigmentierter Lacke auf Basis oxidativ trocknender oder ofentrocknender Systeme, zur Herstellung von Dispersionsfarben, zum Pigmentieren von Kunststoffen, als Farbmittel für die Spinnfärbung, als Farbmittel für elektrophotographische Toner, für Farbstrahldruckverfahren, oder Thermotransferbänder oder für das Anfärben von Kosmetikartikeln.

## Patentansprüche (Patentansprüche für folgende(n) Vertragsstaat(en): ES)

1. Verfahren zur Herstellung eines Monoazopigments der allgemeinen Formel I 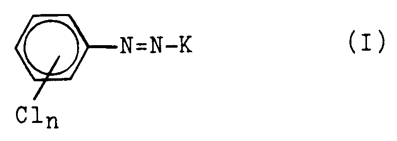 worin K den Rest einer CH-aciden Kupplungskomponente aus der Acetessigsäurearylamid- oder Naphtholreihe und n 2 oder 3 darstellt, mit einem Gehalt von höchstens 25 µg an polychlorierten Biphenylen mit mindestens 4 Chloratomen (PCB) pro g Pigment, bestimmt in der Weise, daß das Pigment zunächst in konzentrierter Schwefelsäure gelöst wird, die PCB-Anteile dann in ein unpolares organisches Lösungsmittel übergeführt und darin nach bekannten Verfahren analysiert werden, durch Azokupplung eines Dichlor- oder Trichlorbenzoldiazoniumsalzes oder eines Gemisches mehrerer derartiger Diazoniumsalze mit mindestens einer CH-aciden Kupplungskomponente H-K aus der Acetessigsäurearylamid-oder Naphtholreihe in wäßrigem Medium, dadurch gekennzeichnet,
a) daß die Azokupplung durch Zugabe der Diazoniumsalzlösung zu einer Suspension oder Lösung der Kupplungskomponente oder durch gleichzeitiges Zudosieren der wäßrigen Suspensionen oder Lösungen des Diazoniumsalzes und der Kupplungskomponente in die Reaktionsmischung erfolgt,
b) daß die Azokupplung bei einem pH-Wert oder in einem pH-Wertbereich von weniger als pH 7 erfolgt und
b1) zwischen pH 4 und 7 während und nach der Azokupplung weniger als 0,05 Mol-%,
b2) bei pH 2 bis 4 während der Azokupplung weniger als 5 Mol-%
b3) bei pH < 2 während der Azokupplung weniger als 25 Mol-% Diazoniumsalz in der Reaktionsmischung nachweisbar ist und in den pH-Bereichen b2) und b3) mehr als 0,05 Mol-% Diazoniumsalz nicht länger als insgesamt 8 Stunden, mehr als 5 Mol-% Diazoniumsalz nicht länger als insgesamt 4 Stunden und mehr als 15 Mol-% Diazoniumsalz nicht länger als insgesamt 2 Stunden vorhanden ist, wobei die Mol-% Diazoniumsalz jeweils auf die Summe der Molzahlen von in der Reaktionsmischung vorhandener Kupplungskomponente und bereits entstandenem Pigment bezogen sind,
c) daß die Azokupplung bei einer Temperatur oder Temperaturen von 0 bis 50°C erfolgt,
d) daß die Azokupplung unter Ausschluß von Nitritionen erfolgt und
e) daß die Azokupplung gegebenenfalls in Gegenwart von Kupplungshilfsmitteln oder Kupplungsbeschleunigern durchgeführt wird.

2. Verfahren nach Anspruch 1, dadurch gekennzeichnet, daß für die Azokupplung mindestens eine der Bedingungen b1), b2) und b3) gilt und
b1) zwischen pH 4 und 7 während und nach der Azokupplung weniger als 0,02 Mol-%,
b2) bei pH 2 bis 4, während der Azokupplung weniger als 0,05 Mol-% und
b3) bei pH < 2 während der Azokupplung weniger als 5 Mol-% Diazoniumsalz in der Reaktionsmischung nachweisbar ist.

3. Verfahren nach Anspruch 1 oder 2, dadurch gekennzeichnet, daß die Azokupplung bei einer Temperatur von 20 bis 40°C erfolgt.

4. Verfahren nach einem oder mehreren der Ansprüche 1 bis 3, dadurch gekennzeichnet, daß die Azokupplung in Gegenwart von anionaktiven oder kationaktiven Tensiden erfolgt.

5. Verfahren nach einem oder mehreren der Ansprüche 1 bis 4, dadurch gekennzeichnet, daß die Diazokomponente des Monoazopigments 2,3-Dichloranilin, 2,4-Dichloranilin, 2,5-Dichloranilin, 2,6-Dichloranilin, 3,4-Dichloranilin, 3,5-Dichloranilin, 2,3,4-Trichloranilin, 2,3,5-Trichloranilin, 2,3,6-Trichloranilin, 2,4,5-Trichloranilin, 2,4,6-Trichloranilin oder 3,4,5-Trichloranilin und die Kupplungskomponente eine Verbindung aus der Acetessigsäurearylamid- oder Naphthol-Reihe ist.

6. Verfahren nach einem oder mehreren der Ansprüche 1 bis 5, dadurch gekennzeichnet, daß K für den Rest der Kupplungskomponente Acetessigsäureanilid, das am Phenylring durch 1 bis 3 Reste aus der Gruppe Methyl, Methoxy, Ethoxy, Nitro und Chlor substituiert ist, Acetessigsäureanilid, das am Phenylring einen ankondensierten fünf- oder sechsgliedrigen Ring aufweist, Naphthol, 2-Hydroxy-3-naphthoesäure oder 2-Hydroxy-3naphthoesäure-N-arylamide steht.

7. Verfahren nach einem oder mehreren der Ansprüche 1 bis 6, dadurch gekennzeichnet, daß die Kupplungskomponente ein 2-Hydroxy-3-naphthoesäure-N-phenylamid ist, das am Phenylring durch einen oder mehrere der Reste Methyl, Methoxy, Ethoxy, Nitro, Alkanoylamino, Aroylamino und Chlor substituiert sein kann und am Phenylring einen ankondensierten 5- oder 6-gliedrigen Heterocyclus aufweisen kann.

8. Verwendung des nach mindestens einem der Ansprüche 1 bis 7 definierten Monoazopigments als Farbmittel in natürlichen und synthetischen Materialien.

9. Verwendung nach Anspruch 8 zum Pigmentieren von Druckfarben für den Buch/Offsetdruck, Tiefdruck, Flexodruck und andere spezielle Druckverfahren, zur Herstellung pigmentierter Lacke auf Basis oxidativ trocknender oder ofentrocknender Systeme, zur Herstellung von Dispersionsfarben, zum Pigmentieren von Kunststoffen, als Farbmittel für die Spinnfärbung, als Farbmittel für elektrophotographische Toner, für Farbstrahldruckverfahren, oder Thermotransferbänder oder für das Anfärben von Kosmetikartikeln.

## Claims (Claims for the following Contracting State(s): BE, CH, DE, FR, GB, IT, LI)

1. A monoazo pigment of the general formula (I) 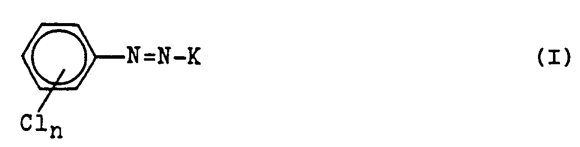 where K is the radical of an acidic CH coupling component of the acetoacetarylamide or naphthol series and n is 2 or 3, which contains not more than 25 µg of polychlorinated biphenyls having at least 4 chlorine atoms (PCBs) per g of pigment, determined by first dissolving the pigment in concentrated sulfuric acid, then transferring the PCB portions into an apolar organic solvent, and analyzing therein for PCB in a conventional manner.

2. A monoazo pigment as claimed in claim 1, wherein the diazo component of the monoazo pigment is 2,3-dichloroaniline, 2,4-dichloroaniline, 2,5-dichloroaniline, 2,6-dichloroaniline, 3,4-dichloroaniline, 3,5-dichloroaniline, 2,3,4-trichloroaniline, 2,3,5-trichloroaniline, 2,3,6-trichloroaniline, 2,4,5-trichloroaniline, 2,4,6-trichloroaniline or 3,4,5-trichloroaniline and the coupling component is a compound of the acetoacetarylamide or naphthol series.

3. A monoazo pigment as claimed in claim 1 or 2, wherein K stands for the radical of the coupling component acetoacetanilide which is substituted on the phenyl ring by 1 to 3 radicals from the group consisting of methyl, methoxy, ethoxy, nitro and chlorine, acetoacetanilide which has a fused-on five- or six-membered ring on the phenyl ring, naphthol, 2-hydroxy-3-naphthoic acid or 2-hydroxy-3-naphthoic N-arylamides.

4. A monoazo pigment as claimed in claim 1, 2 or 3, wherein the coupling component is a 2-hydroxy-3-naphthanilide which may be substituted on the phenyl ring by one or more of the radicals methyl, methoxy, ethoxy, nitro, alkanoylamino, aroylamino and chlorine and may have a fused-on 5- or 6-membered heterocycle on the phenyl ring.

5. A process for preparing the monoazo pigment of the formula (I) as claimed in claim 1 by azo coupling a di- or trichlorobenzene diazonium salt or a mixture of a plurality of such diazonium salts with at least one acidic CH coupling component H-K of the acetoacetarylamide or naphthol series in an aqueous medium, wherein
a) azo coupling is effected by adding the diazonium salt solution to a suspension or solution of the coupling component or by simultaneously metering the aqueous suspensions or solutions of the diazonium salt and of the coupling component into the reaction mixture,
b) azo coupling is effected at a pH or within a pH range of less than pH 7 and
b1) between pH 4 and 7 during and after azo coupling less than 0.05 mol-%,
b2) at pH 2 to 4 during azo coupling less than 5 mol-%, and
b3) at pH < 2 during azo coupling less than 25 mol-% of diazonium salt is detectable in the reaction mixture and in pH ranges b2) and b3) more than 0.05 mol-% of diazonium salt is not present for longer than a total of 8 hours, more than 5 mol-% diazonium salt is not present for longer than a total of 4 hours and more than 15 mol-% of diazonium salt is not present for longer than a total of 2 hours, the mol-%ages of diazonium salt each being based on the total number of moles of coupling component present in the reaction mixture and pigment already formed,
c) azo coupling is effected at a temperature or temperatures of 0 to 50°C,
d) azo coupling is effected in the absence of nitrite ions, and
e) azo coupling is carried out in the absence or presence of coupling assistants or coupling accelerants.

6. The process as claimed in claim 5, wherein an azo coupling is subject to at least one of the conditions b1), b2) and b3) and
b1) between pH 4 and 7 during and after the azo coupling less than 0.02 mol-%,
b2) at pH 2 to 4 during the azo coupling less than 0.05 mol-% and
b3) at pH < 2 during the azo coupling less than 5 mol-% of diazonium salt is detectable in the reaction mixture.

7. The process as claimed in claim 5 or 6, wherein the azo coupling is carried out at a temperature of 20 to 40°C.

8. The process as claimed in at least one of claims 5 to 7, wherein the azo coupling is carried out in the presence of anionic or cationic surfactants.

9. Use of the monoazo pigment defined in at least one of claims 1 to 4, as a colorant in natural and synthetic materials.

10. The use as claimed in claim 9, for pigmenting printing inks for letterpress/offset printing, intaglio printing, flexographic printing and other specific printing methods, for preparing pigmented coatings based on oxidatively drying or oven-drying systems, for preparing emulsion paints, for pigmenting plastics, as colorants for spin dyeing, as colorants for electrophotographic toners, for ink jet printing processes or thermal transfer ribbons or for coloring cosmetic articles.

## Claims (Claims for the following Contracting State(s): ES)

1. A process for preparing a monoazo pigment of the general formula I 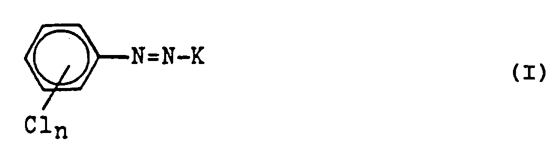 where K is the radical of an acidic CH coupling component of the acetoacetarylamide or naphthol series and n is 2 or 3, which contains not more than 25 µg of polychlorinated biphenyls having at least 4 chlorine atoms (PCBs) per g of pigment, determined by first dissolving the pigment in concentrated sulfuric acid, then transferring the PCB portions into an apolar organic solvent, and analyzing therein for PCB in a conventional manner, by azo coupling a di- or trichlorobenzene diazonium salt or a mixture of a plurality of such diazonium salts with at least one acidic CH coupling component H-K of the acetoacetarylamide or naphthol series in an aqueous medium, wherein
a) azo coupling is effected by adding the diazonium salt solution to a suspension or solution of the coupling component or by simultaneously metering the aqueous suspensions or solutions of the diazonium salt and of the coupling component into the reaction mixture,
b) azo coupling is effected at a pH or within a pH range of less than pH 7 and
b1) between pH 4 and 7 during and after azo coupling less than 0.05 mol-%,
b2) at pH 2 to 4 during azo coupling less than 5 mol-%, and
b3) at pH < 2 during azo coupling less than 25 mol-% of diazonium salt is detectable in the reaction mixture and in pH ranges b2) and b3) more than 0.05 mol-% of diazonium salt is not present for longer than a total of 8 hours, more than 5 mol-% diazonium salt is not present for longer than a total of 4 hours and more than 15 mol-% of diazonium salt is not present for longer than a total of 2 hours, the mol-%ages of diazonium salt each being based on the total number of moles of coupling component present in the reaction mixture and pigment already formed,
c) azo coupling is effected at a temperature or temperatures of 0 to 50°C,
d) azo coupling is effected in the absence of nitrite ions, and
e) azo coupling is carried out in the absence or presence of coupling assistants or coupling accelerants.

2. The process as claimed in claim 1, wherein an azo coupling is subject to at least one of the conditions b1), b2) and b3) and
b1) between pH 4 and 7 during and after the azo coupling less than 0.02 mol-%,
b2) at pH 2 to 4 during the azo coupling less than 0.05 mol-% and
b3) at pH < 2 during the azo coupling less than 5 mol-% of diazonium salt is detectable in the reaction mixture.

3. The process as claimed in claim 1 or 2, wherein the azo coupling is carried out at a temperature of 20 to 40°C.

4. The process as claimed in at least one of claims 1 to 3, wherein the azo coupling is carried out in the presence of anionic or cationic surfactants.

5. The process as claimed in one or more of claims 1 to 4, wherein the diazo component of the monoazo pigment is 2,3-dichloroaniline, 2,4-dichloroaniline, 2,5-dichloroaniline, 2,6-dichloroaniline, 3,4-dichloroaniline, 3,5-dichloroaniline, 2,3,4-trichloroaniline, 2,3,5-trichloroaniline, 2,3,6-trichloroaniline, 2,4,5-trichloroaniline, 2,4,6-trichloroaniline or 3,4,5-trichloroaniline and the coupling component is a compound of the acetoacetarylamide or naphthol series.

6. The process as claimed in one or more of claims 1 to 5, wherein K stands for the radical of the coupling component acetoacetanilide which is substituted on the phenyl ring by 1 to 3 radicals from the group consisting of methyl, methoxy, ethoxy, nitro and chlorine, acetoacetanilide which has a fused-on five- or six-membered ring on the phenyl ring, naphthol, 2-hydroxy-3-naphthoic acid or 2-hydroxy-3-naphthoic N-arylamides.

7. The process as claimed in one or more of claims 1 to 6, wherein the coupling component is a 2-hydroxy-3-naphthanilide which may be substituted on the phenyl ring by one or more of the radicals methyl, methoxy, ethoxy, nitro, alkanoylamino, aroylamino and chlorine and may have a fused-on 5- or 6-membered heterocycle on the phenyl ring.

8. Use of the monoazo pigment defined in at least one of claims 1 to 7, as a colorant in natural and synthetic materials.

9. The use as claimed in claim 8, for pigmenting printing inks for letterpress/offset printing, intaglio printing, flexographic printing and other specific printing methods, for preparing pigmented coatings based on oxidatively drying or oven-drying systems, for preparing emulsion paints, for pigmenting plastics, as colorants for spin dyeing, as colorants for electrophotographic toners, for ink jet printing processes or thermal transfer ribbons or for coloring cosmetic articles.

## Revendications (Revendications pour l'(les) Etat(s) contractant(s) suivant(s): BE, CH, DE, FR, GB, IT, LI)

1. Pigments monoazoïques de formule générale (I) 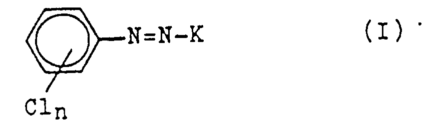 dans laquelle K représente le reste d'un copulant à CH acide de la série du naphtalène ou des arylamides de l'acide acétoacétique, et n est 2 ou 3, ayant une teneur en biphényles polychlorés ayant au moins 4 atomes de chlore (PCB) d'au plus 25 µg par g de pigment, déterminée par un procédé selon lequel on dissout d'abord le pigment dans de l'acide sulfurique concentré, puis on fait passer les fractions de PCB dans un solvant organique apolaire et on les y dose par des procédés connus.

2. Pigment azoïque selon la revendication 1, caractérisé en ce que le constituant diazoïque du pigment monoazoïque est la 2,3-dichloraniline, la 2,4-dichloraniline, la 2,5-dichloraniline, la 2,6-dichloraniline, la 3,4-dichloraniline, la 3,5-dichloraniline, la 2,3,4-trichloraniline, la 2,3,5-trichloraniline, la 2,3,6-trichloraniline, la 2,4,5-trichloraniline, la 2,4,6-trichloraniline ou la 3,4,5-trichloraniline, et le copulant est un composé de la série du naphtalène ou des arylamides de l'acide acétoacétique.

3. Pigment monoazoïque selon la revendication 1 ou 2, caractérisé en ce que K représente le reste du copulant constitué par un anilide de l'acide acétoacétique qui est substitué sur le cycle phényle par 1 à 3 restes du groupe formé par les restes méthyle, méthoxy, éthoxy, nitro et chloro, un anilide de l'acide acétoacétique qui comporte un cycle de 5 ou 6 chaînons condensé sur le cycle phényle, le naphtalène, l'acide 2-hydroxy-3-naphtoïque ou un N-arylamide de l'acide 2-hydroxy-3-naphtoïque.

4. Pigment monoazoïque selon la revendication 1, 2 ou 3, caractérisé en ce que le copulaut est un N-phénylamide de l'acide 2-hydroxy-3-naphtoïque qui peut être substitué sur le cycle phényle par un ou plusieurs des restes méthyle, méthoxy, éthoxy, nitro, alcanoylamino, aroylamino et chloro, et qui peut comporter un hétérocycle de 5 ou 6 chaînons condensé sur le cycle phényle.

5. Procédé de préparation du pigment monoazoïque selon l'invention de formule (I) selon la revendication 1, par copulation azoïque d'un sel de dichloro- ou trichlorobenzènediazonium ou d'un mélange de plusieurs sels de diazonium de ce type avec au moins un copulant H-K à CH acide de la série du naphtalène ou des arylamides de l'acide acétoacétique en milieu aqueux, caractérisé en ce que
a) on effectue la copulation azoïque en ajoutant la solution de sel de diazonium à une suspension ou une solution du copulant ou en ajoutant simultanément de façon dosée les suspensions ou solutions aqueuses du sel de diazonium et du copulant dans le mélange de réaction,
b) la copulation azoïque s'effectue à un pH ou dans un domaine de pH inférieur à 7 et le sel de diazonium dans le mélange de réaction est décelable
b1) en une quantité inférieure à 0,05 % en moles à un pH compris entre 4 et 7 pendant et après la copulation azoïque,
b2) en une quantité inférieure à 5 % en moles à un pH compris entre 2 et 4 pendant la copulation azoïque, et
b3) en une quantité inférieure à 25 % en moles à un pH < 2 pendant la copulation azoïque,
et, dans les domaines de pH b2) et b3), il n'y a pas plus de 0,05 % en moles de sel de diazonium pendant plus de 8 heures au total, plus de 5 % en moles de sel de diazonium pendant plus de 4 heures au total, ni plus de 15 % en moles de sel de diazonium pendant plus de 2 heures au total, le % en moles de sel de diazonium étant toujours rapporté à la somme des nombres de moles du copulant présent dans le mélange réactionnel et du pigment déjà formé,
c) la copulation azoïque s'effectue à une température ou à des températures de 0 à 50°C,
d) la copulation azoïque a lieu en l'absence d'ions nitrite, et
e) on effectue la copulation azoïque éventuellement en présence d'auxiliaires de copulation ou d'accélérateurs de copulation.

6. Procédé selon la revendication 5, caractérisé en ce que, pour la copulation azoïque, est valable au moins l'une des conditions b1), b2) et b3), et le sel de diazonium dans le mélange de réaction est décelable
b1) en une quantité inférieure à 0,02 % en moles à un pH compris entre 4 et 7 pendant et après la copulation azoïque,
b2) en une quantité inférieure à 0,05 % en moles à un pH compris entre 2 et 4 pendant la copulation azoïque, et
b3) en une quantité inférieure à 5 % en moles à un pH < 2 pendant la copulation azoïque.

7. Procédé selon la revendication 5 ou 6, caractérisé en ce que la copulation azoïque s'effectue à une température de 20 à 40°C.

8. Procédé selon l'une au moins des revendications 5 à 7, caractérisé en ce que la copulation azoïque s'effectue en présence d'agents tensio-actifs anioniques ou cationiques.

9. Utilisation du pigment monoazoïque défini selon l'une au moins des revendications 1 à 4 comme colorant dans des matières naturelles et synthétiques.

10. Utilisation selon la revendication 9 pour la pigmentation d'encres d'imprimerie pour l'imprimerie et l'impression offset, l'impression en creux, la flexographie et d'autres procédés d'impression spéciaux, pour la préparation de remis pigmentés à base de systèmes à séchage par oxydation ou à séchage au four, pour la préparation de peintures émulsions, pour la pigmentation de matières plastiques, comme colorant pour la coloration dans la masse de textiles, comme colorants pour des toners électrophotographiques, pour des procédés d'impression à jet d'encre ou des bandes de transfert thermique, ou pour la coloration de produits cosmétiques.

## Revendications (Revendications pour l'(les) Etat(s) contractant(s) suivant(s): ES)

1. Procédé de préparation d'un pigment monoazoïque de formule générale (I) 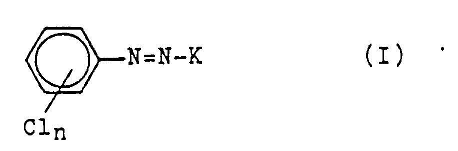 dans laquelle K représente le reste d'un copulant à CH acide de la série du naphtalène ou des arylamides de l'acide acétoacétique, et n est 2 ou 3, ayant une teneur en biphényles polychlorés ayant au moins 4 atomes de chlore (PCB) d'au plus 25 µg par g de pigment, déterminée par un procédé selon lequel on dissout d'abord le pigment dans de l'acide sulfurique concentré, puis on fait passer les fractions de PCB dans un solvant organique apolaire et on les y dose par des procédés connus, par copulation azoïque d'un sel de dichloro- ou trichlorobenzènediazonium ou d'un mélange de plusieurs sels de diazonium de ce type avec au moins un copulant H-K à CH acide de la série du naphtalène ou des arylamides de l'acide acétoacétique en milieu aqueux, caractérisé en ce que
a) on effectue la copulation azoïque en ajoutant la solution de sel de diazonium à une suspension ou une solution du copulant ou en ajoutant simultanément de façon dosée les suspensions ou solutions aqueuses du sel de diazonium et du copulant dans le mélange de réaction,
b) la copulation azoïque s'effectue à un pH ou dans un domaine de pH inférieur à 7 et le sel de diazonium dans le mélange de réaction est décelable
b1) en une quantité inférieure à 0,05 % en moles à un pH compris entre 4 et 7 pendant et après la copulation azoïque,
b2) en une quantité inférieure à 5 % en moles à un pH compris entre 2 et 4 pendant la copulation azoïque, et
b3) en une quantité inférieure à 25 % en moles à un pH < 2 pendant la copulation azoïque,
et, dans les domaines de pH b2) et b3), il n'y a pas plus de 0,05 % en moles de sel de diazonium pendant plus de 8 heures au total, plus de 5 % en moles de sel de diazonium pendant plus de 4 heures au total, ni plus de 15 % en moles de sel de diazonium pendant plus de 2 heures au total, le % en moles de sel de diazonium étant somme des nombres de moles du copulant présent dans le mélange réactionnel et du pigment déjà formé,
c) la copulation azoïque s'effectue à une température ou à des températures de 0 à 50°C,
d) la copulation azoïque a lieu en l'absence d'ions nitrite, et
e) on effectue la copulation azoïque éventuellement en présence d'auxiliaires de copulation ou d'accélérateurs de copulation.

2. Procédé selon la revendication 1, caractérisé en ce que, pour la copulation azoïque, est valable au moins l'une des conditions b1), b2) et b3), et le sel de diazonium dans le mélange de réaction est décelable
b1) en une quantité inférieure à 0,02 % en moles à un pH compris entre 4 et 7 pendant et après la copulation azoïque,
b2) en une quantité inférieure à 0,05 % en moles à un pH compris entre 2 et 4 pendant la copulation azoïque, et
b3) en une quantité inférieure à 5 % en moles à un pH < 2 pendant la copulation azoïque.

3. Procédé selon la revendication 1 ou 2, caractérisé en ce que la copulation azoïque s'effectue à une température de 20 à 40°C.

4. Procédé selon l'une ou plusieurs des revendications 1 à 3, caractérisé en ce que la copulation azoïque s'effectue en présence d'agents tensio-actifs anioniques ou cationiques.

5. Procédé selon l'un ou plusieurs des revendications 1 à 4, caractérisé en ce que le constituant diazoïque du pigment monoazoïque est la 2,3-dichloraniline, la 2,4-dichloraniline, la 2,5-dichloraniline, la 2,6-dichloraniline, la 3,4-dichloraniline, la 3,5-dichloraniline, la 2,3,4-trichloraniline, la 2,3,5-trichloraniline, la 2,3,6-trichloraniline, la 2,4,5-trichloraniline, la 2,4,6-trichloraniline ou la 3,4,5-trichloraniline, et le copulant est un composé de la série du naphtalène ou des arylamides de l'acide acétoacétique.

6. Procédé selon l'une ou plusieurs des revendications 1 à 5, caractérisé en ce que K représente le reste du copulant constitué par un anilide de l'acide acétoacétique qui est substitué sur le cycle phényle par 1 à 3 restes du groupe formé par les restes méthyle, méthoxy, éthoxy, nitro et chloro, un anilide de l'acide acétoacétique qui comporte un cycle de 5 ou 6 chaînons condensé sur le cycle phényle, le naphtalène, l'acide 2-hydroxy-3-naphtoïque ou un N-arylamide de l'acide 2-hydroxy-3-naphtoïque.

7. Procédé selon l'une ou plusieurs des revendications 1 à 6, caractérisé en ce que le copulant est un N-phénylamide de l'acide 2-hydroxy-3-naphtoïque qui peut être substitué sur le cycle phényle par un ou plusieurs des restes méthyle, méthoxy, éthoxy, nitro, alcanoylamino, aroylamino et chloro, et qui peut comporter un hétérocycle de 5 ou 6 chaînons condensé sur le cycle phényle.

8. Utilisation du pigment monoazoïque défini selon l'une au moins des revendications 1 à 7 comme colorant dans des matières naturelles et synthétiques.

9. Utilisation selon la revendication 8 pour la pigmentation d'encres d'imprimerie pour l'imprimerie et l'impression offset, l'impression en creux, la flexographie et d'autres procédés d'impression spéciaux, pour la préparation de vernis pigmentés à base de systèmes à séchage par oxydation ou à séchage au four, pour la préparation de peintures émulsions, pour la pigmentation de matières plastiques, comme colorant pour la coloration dans la masse de textiles, comme colorants pour des toners électrophotographiques, pour des procédés d'impression à jet d'encre ou des bandes de transfert thermique, ou pour la coloration de produits cosmétiques.
